# EUROPEAN PATENT APPLICATION

(11) **EP 3 088 613 A1**
(43) Date of publication of application: **02.11.2016**
(21) Application number: 16163941.4
(22) Date of filing: 05.04.2016
(51) Int. Cl.: E03C 1/04, E03C 1/05, G05D 23/13

(54) **USER FRIENDLY MULTI-FUNCTION SHOWER CONTROL METHOD**

(30) Priority: 29.04.2015 CN 201510208774
(71) Applicant: Xiamen Runner Industrial Corporation, Xiamen 361021 (CN)
(72) Inventor: Dai, Sheng-Chao, 361021 Xiamen (CN); Du, Sheng-Jun, 361021 Xiamen (CN); Liao, Li-Zhong, 361021 Xiamen (CN)
(74) Representative: Lang, Christian

(57) **Abstract**

A user friendly multi-function shower control method, comprising following steps: providing a multi-function shower system; collecting by the multi-function shower system, identification data, health condition parameters, personal preferences of respective family members, and storing them into its storage module; assigning personal shower mode for each family member based on the collected information; scanning the data input by a user, and assigning corresponding shower mode automatically based on the input data. The method mentioned above is capable of providing showering experiences of various modes according to user's preference, such as elderly person shower mode, and children shower mode. The respective mode has its specific water temperature, water flow amount, light luminance, and music selection, while it is convenient to use. The user may design by himself a personality showering mode, or he may use a pre-set showering mode, in realizing a satisfying showering experience.

## Description

### BACKGROUND OF THE INVENTION

### Field of the Invention

The present invention relates to a shower control method, and in particular to a user friendly multi-function shower control method.

### THE PRIOR ARTS

For the shower system presently available on the market, their functions are not yet fully developed, such that the water temperature, water flow amount must be adjusted manually, thus it is not intelligent. By way of example, in the existing shower system, children and elder people requiring special care can not get enough assistance and protection required. To the elder people, the overly high temperature water attained through manual adjustment tends to lead to brain hemorrhage. While the overly low water temperature obtained through manual adjustment tends to lead to catching cold.

Therefore, presently, the design of the shower system is not quite satisfactory, and it leaves much room for improvement.

### SUMMARY OF THE INVENTION

In view of the problems and drawbacks of the prior art, the present invention provides a user friendly multi-function shower control method to overcome the shortcomings of the prior art.

The major objective of the present invention is to provide a user friendly multi-function shower control method. Wherein, the user may use the shower mode set by himself/herself, or he/she may use a pre-set shower mode of the system, to obtain a satisfying showering experience.

In order to achieve the objective mentioned above, the present invention provides a user friendly multi-function shower control method, including the following steps:
Step S1: providing a multi-function shower system.
Step S2: collecting by the multi-function shower system, identification data, health condition parameters, personal preferences of respective family members, and stores them into its storage module; wherein, the health condition parameters include: skin complexion, blood pressure, age, while the personal preferences include light luminance and music classifications.
Step S3: assigning by the multi-function shower system, a personal shower mode for each family member based on information collected in step 2, the multi-function shower system further assigns a personality shower mode and a plurality of optional shower modes.
Step S4: scanning by the multi-function shower system the data input by a user, in case the scanned data input indicating the personal shower mode, go to step S5, in the scanned data input indicating any one of the optional shower modes, go the step S6, or in case the scanned data input indicating the personality shower mode, go to step S7.
Step S5: activating by the multi-function shower system, a personal shower mode interface, to start showering a user, according to the matching personal shower mode fetched from the storage module as based on the input identification data.
Step S6: activating by the multi-function shower system, an optional shower mode interface, to start showing the user, according to the matching optional shower mode through fetching from the storage module as based on the input personal preference.
Step S7: activating by the multi-function shower system a personality shower mode interface, to start showering the user, according to the personality shower mode specified by water flow amount, water temperature, light luminance, and music selection input by the user.

In an aspect of the present invention, in step S3, parameters for the personal shower mode, the optional shower mode, and personality shower mode include: water flow amount, water temperature, light luminance, and music selection.

In another aspect of the present invention, in step S3, parameters for the optional shower mode include ; a children shower mode, an elderly person shower mode, a quick flush shower mode, a dust removal and itch relief shower mode, a fatigue removal shower mode, a muscle relaxing and blood circulation stimulating shower mode, and a post exercise shower mode.

In yet another aspect of the present invention, parameters for the children shower mode include: low water flow amount, water temperature 37°C, soft light, and children songs; parameters for the elderly person shower mode include: low water flow amount, water temperature 35°C, soft light, and march songs; parameters for the quick flush shower mode include: high water flow amount, water temperature 37°C, soft light, and popular music; parameters for the dust removal and itch relief shower mode include: medium water flow amount, water temperature 34°C to 36°C, soft light and country music; parameters for the fatigue removal shower mode include: medium water flow amount, water temperature 37°C to 39°C, soft light, and soft music; parameters for the muscle relaxing and blood circulation stimulating shower mode include: medium water flow amount, water temperature 40°C to 45°C, soft light, and film songs; and parameters for the post exercise shower mode include:
medium water flow amount, water temperature 37°C, soft light, and rock music. wherein, parameters used for the children shower mode, the elderly person shower mode, the quick flush shower mode, dust removal and itch relief shower mode, the fatigue removal shower mode, the muscle relaxing and blood circulation stimulating shower mode, and the post exercise shower mode can be set according to user's requirements.

In a further aspect of the present invention, the multi-function shower system includes: a shower module, a first electric magnetic driving module, a micro controller processing module, a second electric magnetic driving module, a shower touch control panel, a communication module, and a storage module.

Wherein, the shower module is disposed on a ceiling of a shower room, comprising: a shower panel, provided with a first installation slot inside; a shower head, disposed in a first installation slot, with its water input end connected to one end of a water input tube; an electrically controlled three-way valve, with its first water output port connected to other end of the water input tube through a bottom of the ceiling, with its second water output port connected to a shower through a pipe line imbedded in a wall; a first electric magnetic flow valve, through which a water input port of the electrically controlled three-way valve is connected to a water output port of a water supply system. The micro controller processing module is embedded in a side wall of the shower room, and is connected to the first electric magnetic flow valve through the first electric magnetic driving module. The second electric magnetic driving module is disposed, through which an electrically control valve of the electrically controlled three-way valve is connected to the micro controller processing module. The shower touch control panel is disposed on a side wall of the shower room, and is connected to the micro controller processing module. The communication module is disposed on an outer side of a side wall of another shower room, and is connected to the micro controller processing module. And the storage module is disposed on the outer side of the side wall of another shower room, and is connected to the micro controller processing module.

In an aspect of the present invention, the multi-function shower system further includes: an air exhaust fan driving module and an air exhaust fan, the air exhaust fan is connected to the micro controller processing module through the air exhaust fan driving module, while the air exhaust fan is connected to a wind inlet port on the shower panel through a wind guiding pipe line.

In another aspect of the present invention, the multi-function shower system further includes: a shower lamp driving module and a plurality of shower lamps, the shower lamps are embedded in a second installation slot on the shower panel, and are distributed evenly around the shower, the shower lamps are connected to the micro controller processing module through the shower lamp driving module.

In yet another aspect of the present invention, the multi-function shower system further includes: a music module, disposed in a third installation slot on the shower panel, including a water proof loudspeaker, used to broadcast music; and a loudspeaker driving module, the water proof loudspeaker is connected to the micro controller processing module through the loudspeaker driving module.

In a further aspect of the present invention, the water supply system further includes: a water heating can; and a buffer can, with its water output port serving as a water output port of the water supply system, and having two water input ports, wherein, one water input port is connected to a water output end of the water heating can through the second electric magnetic flow valve, while other water input port is connected to a cool water output tube through the third electric magnetic flow valve. The buffer can includes a temperature sensor, disposed in the buffer can. While the temperature sensor, the second electric magnetic flow valve, the third electric magnetic flow valve are all connected to the micro controller processing module.

In yet another aspect of the present invention, on the shower touch control panel is disposed a shower / shower head switching touch control key, a water output flow adjusting touch control key, a water output temperature adjusting touch control key, a light luminance adjusting touch control key, a music selection touch control key, an air exhaust fan open/close touch control key, a shower mode selection touch control key, and a display screen. Wherein, the display screen is used to display a shower / shower head switching state, water output amount, output water temperature, light luminance, the selected music piece, on/off of the air exhaust fan; while the shower mode selection touch control key is used to select pre stored shower mode or history shower mode through the display screen.

Compared with the Prior Art, the user friendly multi-function shower control method of the present invention has the advantages that, it is capable of providing showering experiences of various modes according to user's preference, such as elderly person shower mode for the elderly person, and children shower mode for the children. The respective mode has its specific water temperature, water flow amount, light luminance, and music selection, while it is convenient to use. In application, a user may design by himself/ herself a personality shower mode, or he/she may use a pre-set shower mode of the system, in realizing a satisfying showering experience.

Further scope of the applicability of the present invention will become apparent from the detailed descriptions given hereinafter. However, it should be understood that the detailed descriptions and specific examples, while indicating preferred embodiments of the present invention, are given by way of illustration only, since various changes and modifications within the spirit and scope of the present invention will become apparent to those skilled in the art from the detailed descriptions.

### BRIEF DESCRIPTION OF THE DRAWINGS

The related drawings in connection with the detailed descriptions of the present invention to be made later are described briefly as follows, in which:
Fig. 1 is a flowchart of the steps of a user friendly multi-function shower control method according to an embodiment of the present invention; and
Fig. 2 is a schematic diagram of multi-function shower system used in realizing a user friendly multi-function shower control method according to an embodiment of the present invention.

### DETAILED DESCRIPTION OF THE PREFERRED EMBODIMENT

The purpose, construction, features, functions and advantages of the present invention can be appreciated and understood more thoroughly through the following detailed description with reference to the attached drawings.

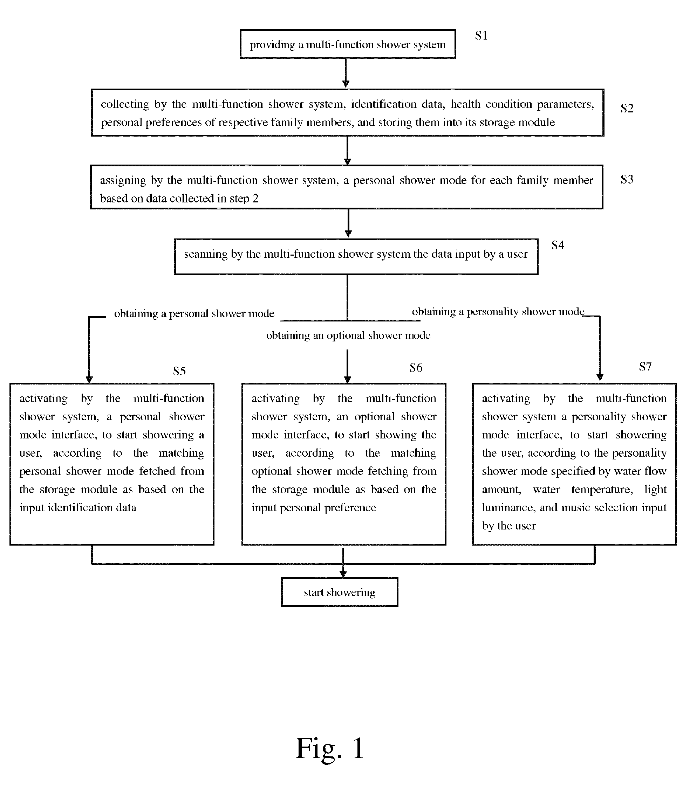

Refer to Fig. 1 for a flowchart of the steps of a user friendly multi-function shower control method according to an embodiment of the present invention. As shown in Fig. 1, the user friendly multi-function shower control method of the present invention includes the following steps:
Step S1: providing a multi-function shower system.
Step S2: collecting by the multi-function shower system, identification data, health condition parameters, personal preferences of respective family members, and stores them into its storage module; wherein, the health condition parameters include: skin complexion, blood pressure, age, while the personal preferences include light luminance and music classifications.
Step S3: assigning by the multi-function shower system, a personal shower mode for each family member based on information collected in step 2, the multi-function shower system further assigns a personality shower mode and a plurality of optional shower modes.
Step S4: scanning by the multi-function shower system the data input by a user, in case the scanned data input indicating the personal shower mode, go to step S5, in the scanned data input indicating any one of the optional shower modes, go the step S6, or in case the scanned data input indicating the personality shower mode, go to step S7.
Step S5: activating by the multi-function shower system, a personal shower mode interface, to start showering a user, according to the matching personal shower mode fetched from the storage module as based on the input identification data.
Step S6: activating by the multi-function shower system, an optional shower mode interface, to start showing the user, according to the matching optional shower mode through fetching from the storage module as based on the input personal preference.
Step S7: activating by the multi-function shower system a personality shower mode interface, to start showering the user, according to the personality shower mode specified by water flow amount, water temperature, light luminance, and music selection input by the user.

In the present embodiment, in the step S3 mentioned above, the parameters for the personal shower mode, the optional shower mode, and personality shower mode include: water flow amount, water temperature, light luminance, and music selection.

In the present embodiment, in the step S3 mentioned above, parameters for the optional shower mode include ; a children shower mode, an elderly person shower mode, a quick flush shower mode, a dust removal and itch relief shower mode, a fatigue removal shower mode, a muscle relaxing and blood circulation stimulating shower mode, and a post exercise shower mode.

In the present embodiment, the parameters for the children shower mode include: low water flow amount, water temperature 37°C, soft light, and children songs; the parameters for the elderly person shower mode include: low water flow amount, water temperature 35°C, soft light, and march songs; the parameters for the quick flush shower mode include: high water flow amount, water temperature 37°C, soft light, and popular music; the parameters for the dust removal and itch relief shower mode include: medium water flow amount, water temperature 34°C to 36°C, soft light, and country music; the parameters for the fatigue removal shower mode include: medium water flow amount, water temperature 37°C to 39°C, soft light, and soft music; the parameters for the muscle relaxing and blood circulation stimulating shower mode include: medium water flow amount, water temperature 40°C to 45°C, soft light, and film songs; and the parameters for the post exercise shower mode include: medium water flow amount, water temperature 37°C, soft light, and rock music, wherein, parameters used for the children shower mode, the elderly person shower mode, the quick flush shower mode, dust removal and itch relief shower mode, the fatigue removal shower mode, the muscle relaxing and blood circulation stimulating shower mode, and the post exercise shower mode can be set according to user's requirements.

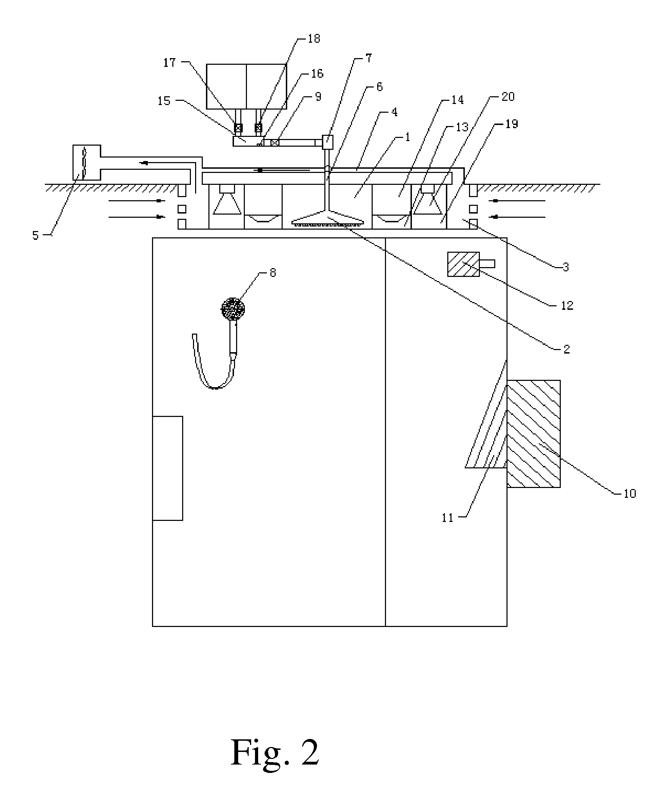

Refer to Fig. 2 for a schematic diagram of multi-function shower system used in realizing a user friendly multi-function shower control method according to an embodiment of the present invention. As shown in Fig. 2, in the present embodiment, the multi-function shower system includes: a shower module, a first electric magnetic driving module, a micro controller processing module 10, a second electric magnetic driving module, a shower touch control panel 11, a communication module 12, and a storage module.

Wherein, the shower module is disposed on a ceiling of a shower room, comprising: a shower panel 11, provided with a first installation slot 1 inside; a shower head 2, disposed in a first installation slot 1, with its water input end connected to one end of a water input tube 6; an electrically controlled three-way valve 7, with its first water output port connected to other end of the water input tube 6through a bottom of the ceiling, with its second water output port connected to a shower 8 through a pipe line imbedded in a wall; a first electric magnetic flow valve 9, through which a water input port of the electrically controlled three-way valve 7 is connected to a water output port of a water supply system. The micro controller processing module 10 is embedded in a side wall of the shower room, and is connected to the first electric magnetic flow valve 9 through the first electric magnetic driving module. The second electric magnetic driving module is disposed, through which an electrically control valve of the electrically controlled three-way valve 7 is connected to the micro controller processing module 10. The shower touch control panel 11 is disposed on a side wall of the shower room, and is connected to the micro controller processing module 10. The communication module 12 is disposed on an outer side of a side wall of another shower room, and is connected to the micro controller processing module 10. And the storage module is disposed on the outer side of the side wall of another shower room, and is connected to the micro controller processing module 10.

In the present embodiment, the multi-function shower system further includes: an air exhaust fan driving module and an air exhaust fan 5, the air exhaust fan 5 is connected to the micro controller processing module 10 through the air exhaust fan driving module, while the air exhaust fan 5 is connected to a wind inlet port 3 on the shower panel through a wind guiding pipe line 4.

In the present embodiment, the multi-function shower system further includes: a shower lamp driving module and a plurality of shower lamps 14, the shower lamps are embedded in a second installation slot 13 on the shower panel, and are distributed evenly around the shower 8, the shower lamps 14 are connected to the micro controller processing module 10 through the shower lamp driving module.

In the present embodiment, the multi-function shower system further includes: a music module, disposed in a third installation slot 19 on the shower panel, including a water proof loudspeaker 20, used to broadcast music; and a loudspeaker driving module, the water proof loudspeaker 20 is connected to the micro controller processing module 10 through the loudspeaker driving module.

In the present embodiment, the water supply system further includes: a water heating can; and a buffer can 15, with its water output port serving as a water output port of the water supply system, and having two water input ports, wherein, one water input port is connected to a water output end of the water heating can through the second electric magnetic flow valve 17, while other water input port is connected to a cool water output tube through the third electric magnetic flow valve 18. The buffer can 15 includes a temperature sensor 16, disposed in the buffer can 15. While the temperature sensor 16, the second electric magnetic flow valve 17, the third electric magnetic flow valve 18 are all connected to the micro controller processing module 10.

In the present embodiment, on the shower touch control panel 11 is disposed a shower / shower head switching touch control key, a water output flow adjusting touch control key, a water output temperature adjusting touch control key, a light luminance adjusting touch control key, a music selection touch control key, an air exhaust fan open/close touch control key, a shower mode selection touch control key, and a display screen. Wherein, the display screen is used to display a shower 8 / shower head 2 switching state, water output amount, output water temperature, light luminance, the selected music piece, on/off of the air exhaust fan 5; while the shower mode selection touch control key is used to select pre stored shower mode or history shower mode through the display screen.

Compared with the Prior Art, the user friendly multi-function shower control method of the present invention has the advantages that, it is capable of providing showering experiences of various modes according to user's preference, such as elderly person shower mode for the elderly person, and children shower mode for the children. The respective mode has its specific water temperature, water flow amount, light luminance, and music selection, while it is convenient to use. In application, a user may design by himself/ herself a personality shower mode, or he/she may use a pre-set shower mode of the system, in realizing a satisfying showering experience.

The above detailed description of the preferred embodiment is intended to describe more clearly the characteristics and spirit of the present invention. However, the preferred embodiments disclosed above are not intended to be any restrictions to the scope of the present invention. Conversely, its purpose is to include the various changes and equivalent arrangements which are within the scope of the appended claims.

## Claims

1. A user friendly multi-function shower control method, comprising following steps:
step S1: providing a multi-function shower system;
step S2: collecting by the multi-function shower system, identification data, health condition parameters, personal preferences of respective family members, and stores them into its storage module; wherein, the health condition parameters include: skin complexion, blood pressure, age, while the personal preferences include light luminance and music classifications;
step S3: assigning by the multi-function shower system, a personal shower mode for each family member based on information collected in step 2, the multi-function shower system further assigns a personality shower mode and a plurality of optional shower modes;
step S4: scanning by the multi-function shower system the data input by a user, in case the scanned data input indicating the personal shower mode, go to step S5, in the scanned data input indicating any one of the optional shower modes, go the step S6, or in case the scanned data input indicating the personality shower mode, go to step S7;
step S5: activating by the multi-function shower system, a personal shower mode interface, to start showering a user, according to the matching personal shower mode fetched from the storage module as based on the input identification data;
step S6: activating by the multi-function shower system, an optional shower mode interface, to start showing the user, according to the matching optional shower mode through fetching from the storage module as based on the input personal preference; and
step S7: activating by the multi-function shower system a personality shower mode interface, to start showering the user, according to the personality shower mode specified by water flow amount, water temperature, light luminance, and music selection input by the user.

2. The user friendly multi-function shower control method as claimed in claim 1, wherein in step S3, parameters for the personal shower mode, the optional shower mode, and personality shower mode include: water flow amount, water temperature, light luminance, and music selection.

3. The user friendly multi-function shower control method as claimed in claim 1, wherein in step S3, parameters for the optional shower mode include ; a children shower mode, an elderly person shower mode, a quick flush shower mode, a dust removal and itch relief shower mode, a fatigue removal shower mode, a muscle relaxing and blood circulation stimulating shower mode, and a post exercise shower mode.

4. The user friendly multi-function shower control method as claimed in claim 1, wherein parameters for the children shower mode include: low water flow amount, water temperature 37°C, soft light, and children songs;
parameters for the elderly person shower mode include: low water flow amount, water temperature 35°C, soft light, and march songs;
parameters for the quick flush shower mode include: high water flow amount, water temperature 37°C, soft light, and popular music;
parameters for the dust removal and itch relief shower mode include: medium water flow amount, water temperature 34°C to 36°C, soft light, and country music;
parameters for the fatigue removal shower mode include: medium water flow amount, water temperature 37°C to 39°C, soft light, and soft music;
parameters for the muscle relaxing and blood circulation stimulating shower mode include: medium water flow amount, water temperature 40°C to 45°C, soft light, and film songs; and
parameters for the post exercise shower mode include: medium water flow amount, water temperature 37°C, soft light, and rock music,
wherein, parameters used for the children shower mode, the elderly person shower mode, the quick flush shower mode, dust removal and itch relief shower mode, the fatigue removal shower mode, the muscle relaxing and blood circulation stimulating shower mode, and the post exercise shower mode can be set according to user's requirements.

5. The user friendly multi-function shower control method as claimed in claim 1, wherein the multi-function shower system includes:
a shower module, disposed on a ceiling of a shower room, comprising:
a shower panel, provided with a first installation slot (1) inside,
a shower head (2), disposed in a first installation slot (1), with its water input end connected to one end of a water input tube (6),
an electrically controlled three-way valve (7), with its first water output port connected to other end of the water input tube (6) through a bottom of the ceiling, with its second water output port is connected to a shower (8) through a pipe line imbedded in a wall,
a first electric magnetic flow valve (9), through which a water input port of the electrically controlled three-way valve (7) is connected to a water output port of a water supply system;
a first electric magnetic driving module;
a micro controller processing module (10), embedded in a side wall of the shower room, and is connected to the first electric magnetic flow valve (9) through the first electric magnetic driving module;
a second electric magnetic driving module, through which an electrically control valve of the electrically controlled three-way valve (7) is connected to the micro controller processing module (10);
a shower touch control panel (11), disposed on a side wall of the shower room, and is connected to the micro controller processing module (10);
a communication module (12), disposed on an outer side of a side wall of another shower room, and is connected to the micro controller processing module (10); and
a storage module, disposed on an outer side of a side wall of another shower room, and is connected to the micro controller processing module (10).

6. The user friendly multi-function shower control method as claimed in claim 5, wherein the multi-function shower system further includes:
an air exhaust fan driving module and an air exhaust fan (5), the air exhaust fan (5) is connected to the micro controller processing module (10) through the air exhaust fan driving module, and the air exhaust fan (5) is connected to a wind inlet port (3) disposed on the shower panel through a wind guiding pipe line (4).

7. The user friendly multi-function shower control method as claimed in claim 5, wherein the multi-function shower system further includes: a shower lamp driving module and a plurality of shower lamps (14), the shower lamps (14) are embedded in a second installation slot (13) on the shower panel, and are distributed evenly around the shower (8), the shower lamps (14) are connected to the micro controller processing module (10) through the shower lamp driving module.

8. The user friendly multi-function shower control method as claimed in claim 5, wherein the multi-function shower system further includes:
a music module, disposed in a third installation slot (19) on the shower panel, including:
a water proof loudspeaker (20), used to broadcast music; and
a loudspeaker driving module, the water proof loudspeaker (20) is connected to the micro controller processing module (10) through the loudspeaker driving module.

9. The user friendly multi-function shower control method as claimed in claim 5, wherein the water supply system includes:
a water heating can; and
a buffer can (15), with its water output port serving as a water output port of the water supply system, and having two water input ports, wherein, one water input port is connected to a water output end of the water heating can through the second electric magnetic flow valve (17), while other water input port is connected to a cool water output tube through the third electric magnetic flow valve (18), the buffer can (15) includes a temperature sensor (16), disposed in the buffer can (15),
wherein, the temperature sensor (16), the second electric magnetic flow valve (17), the third electric magnetic flow valve (18) are all connected to the micro controller processing module (10).

10. The user friendly multi-function shower control method as claimed in claim 1, wherein on the shower touch control panel (11) is disposed a shower / shower head switching touch control key, a water output flow adjusting touch control key, a water output temperature adjusting touch control key, a light luminance adjusting touch control key, a music selection touch control key, an air exhaust fan open/close touch control key, a shower mode selection touch control key, and a display screen, wherein, the display screen is used to display a shower (8) / shower head (2) switching state, water output amount, output water temperature, light luminance, the selected music piece, on/off of the air exhaust fan, while the shower mode selection touch control key is used to select pre stored shower mode or history shower mode through the display screen.
